(19) Europäisches Patentamt
European Patent Office
Office européen des brevets

(11) **EP 0 889 827 B1**

## (12) EUROPEAN PATENT SPECIFICATION

(45) Date of publication and mention
of the grant of the patent:
**26.05.2004 Bulletin 2004/22**

(21) Application number: **97916768.1**

(22) Date of filing: **17.03.1997**

(51) Int Cl.⁷: **B64F 1/28**

(86) International application number:
**PCT/US1997/004091**

(87) International publication number:
**WO 1997/036782 (09.10.1997 Gazette 1997/43)**

(54) **REFRIGERATED FUEL FOR ENGINES**

GEKÜHLTER TREIBSTOFF FÜR MOTOREN

CARBURANTS REFRIGERES POUR MOTEURS

(84) Designated Contracting States:
**AT BE CH DE DK ES FI FR GB GR IE IT LI LU MC NL PT SE**

(30) Priority: **18.03.1996 US 13636 P**
**05.09.1996 US 708638**

(43) Date of publication of application:
**13.01.1999 Bulletin 1999/02**

(73) Proprietor: **Fuel Dynamics**
**Arlington, TX 76013 (US)**

(72) Inventor: **KOETHE, Terence, Lee**
**Keller, TX 76244-0891 (US)**

(74) Representative: **Lawrence, Malcolm Graham**
**Hepworth, Lawrence, Bryer & Bizley**
**Merlin House**
**Falconry Court**
**Baker's Lane**
**Epping Essex CM16 5DQ (GB)**

(56) References cited:
DE-A- 3 214 874          US-A- 4 155 337
US-A- 4 505 124          US-A- 5 251 603

## Description

## TECHNICAL FIELD OF THE INVENTION

The present invention relates to a method of fueling a vehicle engine, and in particular to a method of providing liquid fuel to aircraft and other vehicles.

## BACKGROUND OF THE INVENTION

Air travel has become one of the most preferred modes of transportation when traveling over great distances. Modern jet aircraft are well equipped for sustained air travel at high speeds, enabling them to travel long distances in fairly short periods of time. Since jets and other aircraft can carry only a limited quantity of fuel, one of the major factors in limiting the distance over which aircraft can fly is the necessity for refueling. While in-flight refueling is possible today with some types of aircraft, most refueling is performed on the ground. These refueling stops prolong travel time. It is therefore desirable to increase the amount of fuel that can be stored on the aircraft, preferably with no or only minimal alterations to the existing aircraft structure.

It is known that the performance of reciprocating engines utilizing a fuel/air combustion mixture is improved with the introduction of cooled air. This is due to the increased density of the air, which results in higher oxygen availability for combustion. The cooled air also prevents premature combustion during the compression of the combustion mixture. Cooling of fuel for these engines utilizing existing air-conditioning equipment is also known and is used to reduce fuel vapors that may create vapor locks in fuel lines or to reduce lost fuel to the atmosphere as it evaporates from the fuel tank. The prior art also teaches the use of fuel cooled by means of an air conditioning system to cool the air introduced into the engine, and to retard vaporization of the fuel during compression to thus improve engine efficiency.

## SUMMARY OF THE INVENTION

Various proposals for fueling aircraft have been proposed in the prior art, see, for example, DE 3,214,878 and US 5,251,603. However, all of these proposed methods have some limitations.

Accordingly, the invention provides, in a first aspect, a method of fueling an aircraft having an onboard fuel storage tank, comprising the steps of providing a liquid fuel for fueling the aircraft, transferring the fuel to a ground location, and the method characterized by: cooling the fuel to reduced temperatures externally of the aircraft on the ground and to substantially less than ambient temperature so that the volume of the fuel is reduced; and transferring the fuel to the aircraft and storing the fuel in the onboard fuel storage tank while the fuel is at the reduced temperatures, the reduced temperature and volume of the fuel thereby increasing the energy value of the fuel per unit volume.

According to a second aspect, the invention provides a fuel delivery system for delivering fuel to an aircraft, comprising a fuel storage tank on the ground, and characterized by a fuel line connected to said storage tank for delivering fuel to a heat exchanger from within said storage tank; said heat exchanger connected to said fuel line for receiving and cooling the fuel from said fuel storage tank to reduced temperatures, which are less than ambient temperatures, wherein the cooled volume of the fuel is reduced below the volume of the fuel atmospheric temperatures; and a second fuel line connected to said heat exchanger for delivering the fuel to the aircraft at the reduced temperatures.

## BRIEF DESCRITION OF THE DRAWINGS

For a more complete understanding of the present invention and the advantages thereof, reference is now made to the following description taken in conjunction with the accompanying Drawings in which:

FIGURE 1 illustrates a schematic representation of an aircraft being fueled in accordance with the present invention;

FIGURE 2 illustrates a mobile refrigeration unit used in cooling fuel in accordance with the present invention;

FIGURE 3 illustrates a side elevational view of a portable refrigeration unit made according to the present invention;

FIGURE 4 illustrates a schematic diagram depicting a two-stage, low temperature chiller for providing jet fuel at cryogenic temperatures according to the present invention; and

FIGURE 5 illustrates a side elevational view of an aircraft refueller truck which includes a portable refrigeration unit which is used in accordance with the present invention.

## DETAILED DESCRIPTION OF THE INVENTION

A significant reduction in the volume of liquid fuels used in organic combustion reactions can be obtained by drastically reducing the temperature of the fuel below ambient temperatures. The fuels utilized in this invention are primarily liquid petroleum distillate fuels, and include kerosene or jet fuels, aviation gasoline (avgas), and automobile gasoline. It should be apparent to those skilled in the art, however, that the invention could have application to other organic liquid fuel substances and should not be limited to those listed or described herein.

The invention has particular application in the field of aviation where fuel storage space is limited. By reducing the volume of the fuel prior to fueling, a greater mass of fuel can be stored for use on the aircraft. This increases the flight time of the aircraft, allowing it to travel greater distances before refueling.

The change in volume of kerosene or jet fuel can be approximated for every degree change in temperate by the following formula:

$$V_f = V_i - [V_i\ (0.0006/°F)\ (T_i - T_f)]$$

where $V_f$ is the final volume, $V_i$ is the initial volume, $T_i$ is the initial temperature, and $T_c$ is the final temperature. Thus, 3,7851 (one thousand gallons) of jet fuel at 15.5°C (60°F) that is cooled to -26°C (-15°C) will have a final volume of about 3,6141 (955 gal). This becomes especially significant on commercial aircraft where large amounts of fuel are stored and consumed. For instance, a typical "BOEING 747" may hold about 200,000 1 (53,000 gallons) of fuel. By reducing the temperature of the same volume of fuel from 15.5°C(60°F) to -40°C (-40°F), a 55.5°C (100°F) temperature differential, this volume is reduced by about 12,0001 (3,180 gallons). This equates to over 9,000 kg (20,000 pounds) of fuel that can be added to the plane's fuel tanks. In other applications, cooling the temperature of the fuel beneath ambient temperatures by a temperature differential of 22.2°C (40°F) may be adequate to provide enhanced fuel capacity and to increase the energy level per unit volume of the fuel, such as cooling the fuel from ambient temperatures of 15.5°C (60°F) to a reduced temperature of -6.6°C (20°F). Additionally, in still other applications, it may be desirable to reduce the temperature of the fuel beneath ambient temperatures, yet maintain the fuel temperatures above 0°C (32°F) such that the freezing point of moisture in the ambient air will be avoided.

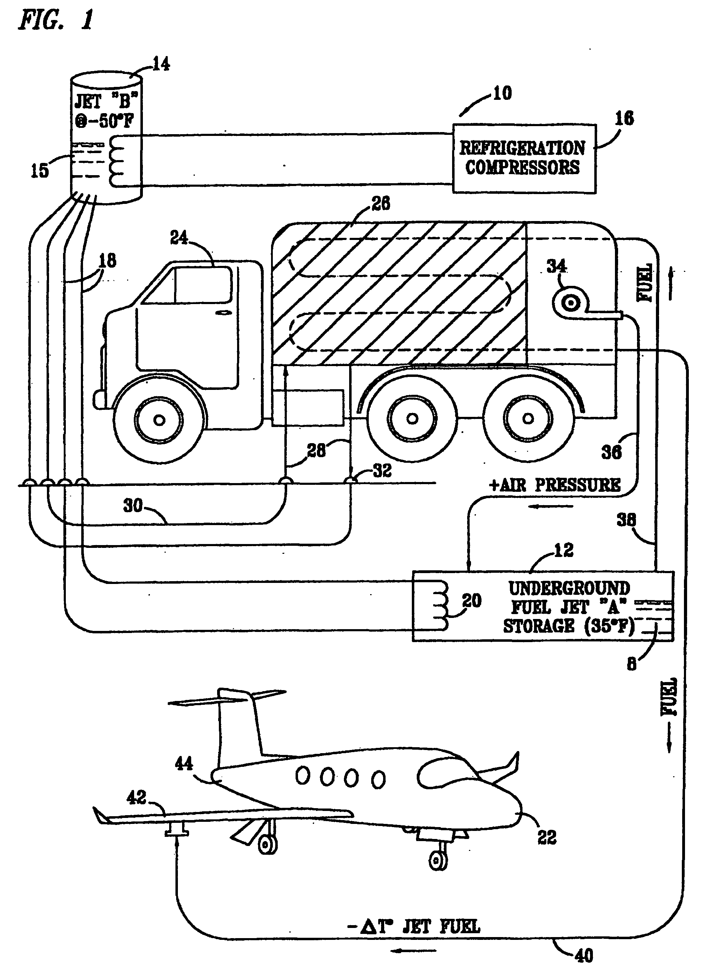

Referring now to FIGURE 1, there is illustrated a fuel cooling system 10 for refrigeration of jet fuel 8 at a conventional airport facility. Typically, fuel is stored in underground tanks. In this particular case, Jet "A" grade fuel 8 is stored in an underground tank 12. Jet "A" fuel 8 is a warm-weather jet fuel that ceases to flow readily at temperatures below approximately -44.4°C (-48°F). This is commonly referred to as the "pour point". Located at a nearby above-ground position is an insulated fuel storage tank 14. The tank 14 holds Jet "B" grade fuel 15. Jet "B" fuel 15 is a cold-weather fuel having a pour point of -50°C (-58°F).

Fuel stored in the tank 14 is coupled to a refrigeration unit 16 that cools the Jet "B" fuel within the insulated tank 14 to a temperature of about -45.5°C (-50°F), which is above the pour point of the fuel. Insulated fuel lines 18 are coupled between the tank 14 and a heat exchange unit 20 which is located in an underground tank 12. By circulating the refrigerated Jet "B" fuel through the heat exchanger 20, the fuel stored in the tank 12 can be prechilled. The temperature of the fuel within the tank 12 should be monitored and the amount of cooling fuel circulated from the tank 14 should be controlled to prevent the temperature of the fuel within the tank 12 from dropping below 0°C (32°F). This is to prevent freezing of any existing water that might otherwise damage the tank or fittings. Preferably, the temperature of the fuel within the tank 12 is kept at 1.6°C (35°F).

When it is necessary to fuel an aircraft, such as aircraft 22, a mobile hydrant unit or a truck 24 carrying a heat exchanger 26 is positioned near the aircraft 22 and the underground tank 12, just as a conventional hydrant truck would be during fueling. Although various types of heat exchangers may be used for the heat exchanger 26, a plate-type heat exchanger has been found to be effective.

The heat exchanger 26 is connected via hoses 28 to insulated underground pipelines 30 at connections 32. The pipelines 30 feed and return the Jet "B" fuel from the tank 14 as it is circulated through the heat exchanger 26, where it acts as a coolant. As this is done, pressurized air from a compressor 34 is introduced into the underground tank 12 through a line 36. This forces the prechilled Jet "A" fuel through a line 38 into the heat exchanger 26, which is mounted on the truck 24, where the fuel is cooled even further.

The temperature of the refrigerated or chilled Jet "A" fuel may vary as it exits the heat exchanger 26. Preferably, the colder the fuel the better, provided the temperature of the fuel is maintained above the pour point of the fuel. Temperatures anywhere between -17.7 to -45.5°C (0 to -50°F) may be reached, with between -26 to -45.5°C (-15 to -50°F) being preferred. In the particular example described, the Jet "A" fuel may be cooled to approximately -40°C (-40°F), which is above the pout point of the fuel.

The cooled Jet "A" fuel is passed from the heat exchanger 26, through a fuel hose 40 and to the fuel tank 42 of the aircraft 22. The chilled Jet "A" fuel is then supplied to the engines 44 of the aircraft 22 as would normal temperature fuel. Increases in volume of the fuel due to warming usually are more than compensated for by the volume consumed during flight. The temperature of the fuel may rise only a few degrees per hour, but this is dependent upon ambient conditions. Because the cold-weather Jet "B" fuel is used as the coolant, leaks in either the heat exchanger 20 or the heat exchanger 26 do not present a major concern, as would exist if a non-jet-fuel coolant were used. Although the system of FIGURE 1 utilizes a second refrigerated fuel as the coolant, liquid nitrogen may also be used to quickly reduce the temperature of elevated or ambient temperature fuels to sub-zero temperatures.

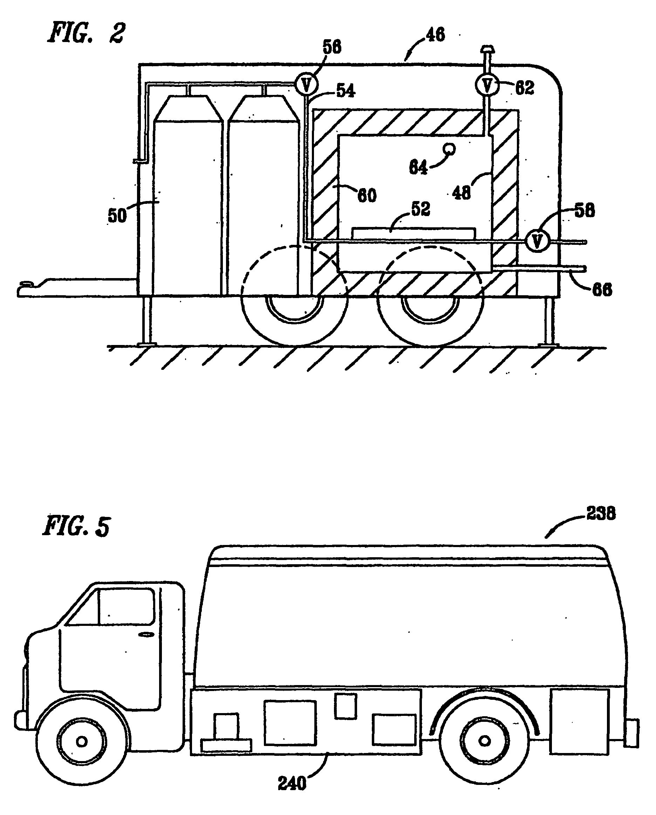

Referring now to FIGURE 2, there is illustrated a device 46 employing liquid nitrogen for cooling fuel. The device 46 is shown as a trailer, so that it may be moved to desired locations if needed, however, it may be stationary as well. The device 46 may be provided with a pump or compressor (not shown), such as the compressor 34 of FIGURE 1, to deliver fuel to an aluminum fuel tank 48 of the device 46. Liquid nitrogen is stored in Dewar tanks or vessels 50. The number and size of tanks will depend on the quantity of fuel being cooled. It has been found that 18,900 l (5,000 gallons) of liquid nitrogen is adequate to reduce the temperature of 60,000l (16,000 gallons) of jet fuel by 55.5°C (100°F).

A cryogenic heat exchanger 52 is disposed within a tank 48. Materials of the heat exchanger 52 are preferably non-ferrous materials, such as aluminum or brass. Stainless steel may also be used, however, ferrous materials tend to become brittle at extremely low temperatures. The heat exchanger 52 is connected to the nitrogen tanks 50 by an insulated liquid nitrogen supply line 54. A control valve 56 regulates introduction of nitrogen into the heat exchanger 52. Temperature probes and suitable controls (not shown) should be provided to ensure that the fuel is cooled and maintained at the desired temperature. A pressure relief valve 58 is provided for venting nitrogen from the heat exchanger 52 to the atmosphere.

Insulation 60, such as EPS foam, or a vacuum chamber, surrounds the fuel tank 48. A pressure relief valve 62 is provided with the tank 48 to vent fuel vapors to the atmosphere if necessary. An inlet 64 of the tank 48 allows ambient temperature fuel to be cooled to flow into the tank 48. Cold fuel is withdrawn from the tank 48 through an outlet 66. A suitable delivery hose, a pump, a nozzle, a filter and metering equipment (not shown) may be provided with the tank 48 and coupled to the outlet 66.

To use the device 46 of FIGURE 2, ambient or warm temperature fuel is pumped into the tank 48 through the inlet 64. As the tank 48 is filled, the control valve 56 is opened to allow liquid nitrogen to flow from the tanks 50 to the heat exchanger 52 so that the fuel within the tank 48 is cooled. Nitrogen gas exits the heat exchanger 52 and is vented to the atmosphere through the valve 58. As the fuel is cooled to the desired temperature, it is withdrawn from the tank 48 through the outlet 66 and supplied to the fuel storage tank(s) of the vehicle or aircraft being fuelled. It should be apparent that the fuel cooled by means of the device 46 may be cooled as a batch or may be fed continuously through the tank 48 so that a continuous stream of cooled fuel is supplied. Appropriate controls should be provided to ensure that the fuel exiting the tank 48 is maintained at the desired temperature.

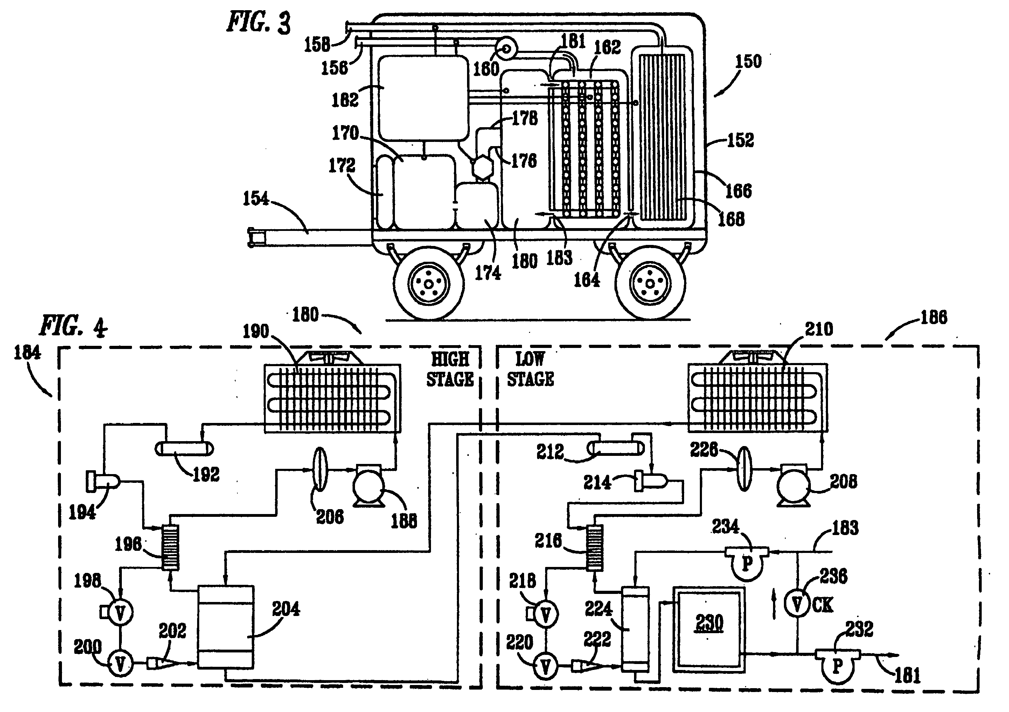

Referring now to FIGURE 3, there is illustrated a side elevational view of a portable refrigeration unit ("PRU") 150, which is a self contained fuel cooling unit made according to the present invention. As depicted in FIGURE 3, the PRU 150 is trailer mounted. The PRU 150 includes an explosion-proof cabinet 152 which is mounted to a trailer chassis 154. A fuel inlet 156 and a fuel outlet 158 are provided for passing fuel into and then from the PRU 150. A fuel pump 160 is provided on the inlet fuel line 156. In some embodiments of the present invention, the pump on the conventional fuel supply may provide sufficient pressure for flowing the fuel through the PRU 150, such that the fuel pump 160 is only required in high flow conditions.

The PRU 150 further includes a heat exchanger 162 to which the fuel inlet 156 is connected. A flow path 164 connects the heat exchanger 162 in fluid communication with a water separation unit 166, which preferably is of the type having a coalescing filter 168. In other embodiments, other types of water separators may provide the water separator unit 166 of the PRU 150, such as gravity type separators and various other types. In the preferred water separation unit 166, an absorption media 168 is provided which swells upon contact with moisture. When excessive moisture is absorbed by the absorption media 168, the PRU 150 will require servicing.

A power unit 170 provides the motive power for operation of the PRU 150. The power unit 170 is a preferably a self-contained industrial diesel engine, which is configured to operate on the jet fuel being chilled by the PRU 150. A radiator 172 is provided for cooling a liquid coolant used within the power unit 170. The radiator 172 is of the type used with conventional diesel engines. The power unit 170 drives a hydraulic drive pump 174. The hydraulic drive pump 174 is connected by hydraulic lines 176 and 178 to a low temperature chiller 180. The hydraulic pump 174 moves hydraulic fluid through the hydraulic lines 176 and 178 to drive compressors included in the low temperature chiller 180. An electronic control unit 182 monitors and controls operation of the various components of the PRU 150. The electronic control unit 182 preferably includes a programmable controller, such as a microprocessor of the type used conventional personal computers and process controllers. The chiller 180 is connected to heat exchanger 162 by flow paths 181 and 183.

Referring now to FIGURE 4, there is illustrated a schematic diagram of a two-stage chiller which is preferably utilized to provide the low temperature chiller 180 of the PRU 150. The chiller 180 includes a high stage 184 and a low stage 186. The high stage 184 includes a compressor 188, which is preferably a screw type compressor that is hydraulically driven by the power unit 170 and the hydraulic drive pump 174. The compressor 188 causes the refrigerant to flow within the high stage section 184. The refrigerant passes from the compressor 188 to a condenser 190. The condenser 190 is air cooled, with a fan forcing the air to pass through the condenser 190. Ambient air provides a heat sink. The refrigerant passes through the condenser 190, through receiver 192 and then through a filter/dryer unit 194. The refrigerant then passes from the filter/dryer unit 194 and through a first side of a liquid/suction interchanger 196. A solenoid valve 198 controls the flow of the refrigerant through the high stage 184. The refrigerant will then flow through the thermal expansion valve 200, through a distributor 202 and to an evaporator/condenser 204. The high stage refrigerant passes through the evaporator side of the evaporator/condenser 204, through a second side of the liquid/suction interchanger 196 and to a suction filter 206 on the inlet of the hydraulically powered compressor 188.

The low stage 186 includes a hydraulically powered compressor 208, which is preferably a screw type compressor. The discharge of the compressor 206 is connected to an air cooled desuperheater 210, which is preferably cooled by fan forced air, such that ambient air provides a heat sink. Refrigerant then passes from the air cooled desuperheater 210 and through the low stage side of the evaporator/condenser 204 for transferring heat from the low stage refrigerant to the high stage refrigerant. The low stage refrigerant then passes through a receiver 212 and a filter dryer 214, and through a liquid/suction interchanger 216. A solenoid valve 218 is located after the liquid/suction interchanger 216 for controlling the flow of the refrigerant through the low stage 186. The low stage refrigerant then passes through a thermal expansion valve 220, a distributor 222 and a first side of an evaporator 224. The refrigerant passes from the evaporator 224, back through the liquid/suction interchanger 216 and then through a suction filter 226. The jow side refrigerant then passes from the suction filter 226 and into the inlet of the compressor 208.

A cooling fluid preferably passes through a second side of the evaporator 224. In other embodiments, the fuel may be directly cooled in the evaporator 224. Heat is transferred from the cooling fluid to the second stage refrigerant passing through the second stage 186. The cooling fluid, after passing through the evaporator 224, passes into a storage reservoir 230. A pump 232 is connected to the outlet of the storage reservoir 230. A bypass check valve 236 is connected to the line extending between the storage reservoir 230 and the pump 232. The check valve 236 will pass the cooling fluid to the bypass pump 234 in response to the bypass pump 234 being actuated to circulate the cooling fluid therethrough. The check valve 236 will pass the cooling fluid from the discharge of the storage reservoir 230, to the inlet of the bypass pump 234, and then to the cooling fluid inlet of the evaporator 224.

The PRU 150 may be towed behind a conventional vehicle, or the refrigeration components thereof may be mounted to the chassis of a conventional refueling truck, as shown in FIGURE 5. When the PRU 150 is used in conjunction with a conventional fuel truck, the PRU 150 will take advantage of the truck's onboard pumps, filters and water separation unit, which are typically mounted on such fuel trucks. After lowering the temperature, the fuel is super-filtered and super-water separated, then brought back to the truck where it is again filtered and separated and immediately prior to delivery of the aircraft.

In the preferred embodiment of the low temperature chiller 180 of the PRU 150, a conventional refrigerant is utilized rather than liquid nitrogen. The refrigerant is preferably HFC-507/R-23. Other types of refrigerant may be utilized such as SYLTHERM XLT liquid or d-LIMONENE. The PRU 150 is sized for processing from 378.5 l to 3,028 l (100 to 800 gallons) per minute of liquid jet fuel, grades A and B. The physical size of the PRU 150 is 5.4 m (18 feet) long, by 2.4 m (8 feet) wide, by 2.4 m (8 feet) high. The weight is approximately 4,760 kg (10,500 pounds). The power unit 170 is rated to 120 kW (160 horsepower). The estimated load of the PRU 150 at 378.5l (100 gallons) per minute is estimated to be 2,030 MJ (1,924,230 BTUs) per hour. The PRU 150 microprocessor controlled, and includes the initiation of a fail safe shut down should operating condition sensors indicate a malfunction or unsafe circumstances. The PRU 150 will automatically shut down at a fuel pressure of 4,576 gm/cm (65 PSI). The fail safe automatic shut down temperature is -48.3°C (-55°F) for the refrigerants, and -36°C (-33°F) for the process liquids. Kerosene of a specific heat of 0.50 and specific gravity of 0.777 is utilized for the cooling fluid, which transfers heat between the low temperature chiller 180 and the heat exchanger 162. The refrigerant transfer fluid outlet temperature is preferably -40°C (-40°F). Design pressures are 3,515 gm/cm (50 PSI), at design refrigerant flow rates of 757 L (200 gallons) per minute. The normal operating ambient temperature range of the unit is from 0°C to 40.5°C (32°F to 105°F).

Referring now to FIGURE 5, there is illustrated a side elevational view of an aircraft refueller truck 238 which includes a portable refrigeration unit 240, which is mounted to the chassis of the truck. The refrigeration unit 240 includes the processing components of the PRU 150, except that they are mounted to the chassis of the truck 238 rather than a trailer.

In yet other embodiments of the present invention, expendable refrigerants other than liquid nitrogen may be used for cooling fuel. As used herein, expendable refrigerants are those refrigerants which are used once, then typically released as gases to the atmosphere. Expendable refrigerants may be provided by liquid nitrogen, carbon dioxide, argon or liquid helium. Such expendable refrigerants can be utilized in the above described embodiments in place of liquid nitrogen.

As can be seen, there are several advantages achieved by the above-described invention. The refrigerated fuel has a much smaller density so that more fuel may be stored within fuel tanks. This is particularly advantageous for large commercial jet aircraft, which require great amounts of fuel.

Aircraft reciprocating engine technology does not use modem computer electronic monitoring devices to monitor levels of unburned fuel residue in exhausts. Refrigerated fuel offers aircraft significant advantage. Aircraft benefit through more-lean or more-rich fuel/air mixtures as accomplished by the pilot in flight through manual adjustment. Extra energy becomes available through a more-dense refrigerated fuel. In a refrigerated state, the fuel itself contains additional energy per measurement and therefore offers more available engine power at take-off and in cruise flight through more rich-mixtures or the engine can be manually leaned-back, providing a more-lean and efficient fuel burn, increased economy, extended range and reduced emissions.

Aircraft engines are more susceptible to heat-related operational problems due to less cooling airflow during ground operations at low rpm settings and are difficult to re-start after engine shutdown. Refrigerated fuel reduces difficult hot re-starts.

Aircraft applications benefit through the use of refrigerated fuel, insulated fuel tanks and/or dedicated systems intended to create and/or maintain appropriate refrigerated fuel temperatures. The cold nature of these fuel tanks is used to further benefit the operation of the aircraft. The fuel tank provides a source of cool air. Outside air is circulated through thermal corridors or air passageways, in contact with the fuel tank or through ducting, toward engine compartments and/or passenger areas needed to be air conditioned. This low temperature air source does not need energy derived from engine power, enhancing engine efficiency.

Although preferred embodiments have been described in detail, it should be understood that various changes, substitutions and alterations can be made therein without departing from the scope of the invention as defined by the appended claims.

## Claims

1. A method of fueling an aircraft (22) having an onboard fuel storage tank (42), comprising the steps of providing a liquid fuel (8) for fueling the aircraft (22), transferring the fuel (8) to a ground location, and the method **characterized by**:

   cooling the fuel (8) to reduced temperatures externally of the aircraft (22) on the ground and to substantially less than ambient temperature so that the volume of the fuel (8) is reduced; and transferring the fuel (8) to the aircraft (22) while the fuel (8) is at the reduced temperatures and storing the fuel (8) in the onboard fuel storage tank (42), the reduced temperature and volume of the fuel (8) thereby increasing the energy value of the fuel (8) per unit volume.

2. The method of claim 1, wherein the fuel (8) is cooled to temperatures not substantially less than 0°C (32 degrees F).

3. The method of claim 1, wherein the fuel (8) is cooled to temperatures which are not substantially less than 22.2°C (40 degrees F) below ambient temperatures.

4. The method of claim 1, wherein the fuel (8) is cooled to temperatures between about -18°C and -45°C (0 degrees F and -50 degrees F).

5. The method of claim 1, wherein the fuel (8) is cooled to temperatures above the pour point of the fuel (8).

6. The method of any preceding claim, wherein the onboard fuel storage tank (42) is insulated.

7. The method of any preceding claim, wherein the step of cooling the fuel (8) to reduced temperatures comprises the steps of:

   providing a coolant fluid (15) having a temperature below the reduced temperatures;
   providing the fuel (8) in a storage vessel (12);
   providing a heat exchanger (26);
   transferring a portion ofthe fuel (8) from the storage vessel (12) to the heat exchanger (26); and
   utilizing the coolant fluid (15) in the heat exchanger (26) to cool the amount of fuel (8) as the amount of fuel (8) is passed through the heat exchanger (26) so that the amount of fuel (8) is cooled to the reduced temperatures.

8. The method of claim 7, wherein the coolant fluid (15) includes a second amount of fuel.

9. The method of either claim 7 or claim 8, wherein the heat exchanger (26) is mounted to a mobile unit (24) that can be selectively positioned near the storage vessel (12) and aircraft (22).

10. The method of any one of claims 7 to 9, wherein the coolant fluid (15) is cooled by means of a refrigeration unit (16).

11. The method of any one of claims 7 to 10, wherein the coolant fluid is an expendable refrigerant.

12. The method of any one of claims 7 to 11, wherein the fuel (8) is cooled to temperatures less than about -26°C (-15 degrees F).

13. The method of any one of claims 7 to 11, wherein the fuel (8) is cooled to temperatures between about -26°C and -45°C (-15 degrees F and -50 degrees F).

14. The method of any one of claims 7 to 11, wherein the fuel (8) is cooled to temperatures below the flashpoint of the fuel (8).

15. The method of any one of claims 7 to 14, wherein the step of transferring the fuel (8) from the onboard fuel storage tank (42) to the engine (44) of the aircraft (22) includes the step of passing the fuel (8) into the engine (44) while at the reduced temperatures.

16. A fuel delivery system for delivering fuel (8) to an aircraft (22), comprising a fuel storage tank (12) on the ground, and **characterized by**

    a fuel line (38) connected to said storage tank (12) for delivering fuel (8) to a heat exchanger (26) from within said storage tank (12);

    said heat exchanger (26) connected to said fuel line (38) for receiving and cooling the fuel (8) from said fuel storage tank (12) to reduced temperatures, which are less than ambient temperatures, wherein the cooled volume of the fuel (8) is reduced below the volume of the fuel (8) at atmospheric temperatures; and

    a second fuel line (40) connected to said heat exchanger (26) for delivering the fuel (8) to the aircraft (22) at the reduced temperatures.

17. The fuel delivery system of claim 16, and further comprising:

    a chiller (180) for compressing and expanding a refrigerant fluid to transfer heat from the fuel (8) to a heat sink; and

    a cooling fluid circulation system (174) which circulates a cooling fluid between said chiller (180) and said heat exchanger (162) for transferring heat therebetween and increasing the energy value of the fuel (8) per unit volume.

18. The fuel delivery system of either claim 16 or claim 17, further comprising a water separation unit (166) connected between said heat exchanger (162) and said second fuel line (158) for removing water from the fuel (8) at the reduced temperatures.

**Patentansprüche**

1. Verfahren zum Betanken eines Flugzeugs (22) mit einem bordeigenen Treibstoffspeichertank (42), die Schritte umfassend, einen flüssigen Treibstoff (8) zum Betanken des Flugzeugs (22) bereitzustellen, den Treibstoff (8) an einen Ort am Boden weiterzuleiten, wobei das Verfahren **gekennzeichnet ist durch**:

    Kühlen des Treibstoffs (8) auf verringerte Temperaturen außerhalb des Flugzeugs (22) am Boden und auf eine Temperatur, die wesentlich kleiner als die Umgebungstemperatur ist, sodass das Volumen des Treibstoffs (8) verringert wird; und

    Weiterleiten des Treibstoffs (8) zum Flugzeug (22), während der Treibstoff (8) bei den verringerten Temperaturen ist und Lagern des Treibstoffs (8) in dem bordeigenen Treibstoffspeichertank (42), wobei die verringerte Temperatur und das verringerte Volumen des Treibstoffs (8) den Energiewert des Treibstoffs (8) pro Volumeneinheit vergrößern.

2. Verfahren nach Anspruch 1, wobei der Treibstoff (8) auf Temperaturen nicht wesentlich kleiner als 0°C (32 Grad F) gekühlt wird.

3. Verfahren nach Anspruch 1, wobei der Treibstoff (8) auf Temperaturen nicht wesentlich kleiner als 22,2°C (40 Grad F) unter Raumtemperaturen gekühlt wird.

4. Verfahren nach Anspruch 1, wobei der Treibstoff (8) auf Temperaturen zwischen ungefähr -18°C und -45°C (0 Grad F und -50 Grad F) gekühlt wird.

5. Verfahren nach Anspruch 1, wobei der Treibstoff (8) auf Temperaturen oberhalb des Stockpunkts des Treibstoffs (8) gekühlt wird.

6. Verfahren nach einem der vorhergehenden Ansprüche, wobei der bordeigene Treibstoffspeichertank (42) isoliert ist.

7. Verfahren nach einem der vorhergehenden Ansprüche, wobei der Schritt des Kühlens des Treibstoffs (8) auf verringerte Temperaturen die Schritte umfasst:

    Bereitstellen einer Kühlflüssigkeit (15) mit einer Temperatur unterhalb der verringerten Temperaturen;

    Bereitstellen des Treibstoffs (8) in einem Speicherbehälter (12);

    Bereitstellen eines Wärmetauschers (26);

    Weiterleiten eines Teils des Treibstoffs (8) vom Speicherbehälter (12) zum Wärmetauscher (26); und

    Verwenden der Kühlflüssigkeit (15) im Wärmetauscher (26) zum Kühlen der Treibstoffmenge (8), wenn die Treibstoffmenge (8) durch den Wärmetauscher (26) geführt wird, sodass die Treibstoffmenge (8) auf verringerte Temperaturen gekühlt wird.

8. Verfahren nach Anspruch 7, wobei die Kühlflüssigkeit (15) eine zweite Treibstoffmenge einschließt.

9. Verfahren nach Anspruch 7 oder Anspruch 8, wobei der Wärmetauscher (26) an einer mobilen Einheit (24) befestigt ist, die wahlweise nahe dem Speicherbehälter (12) und dem Flugzeug (22) angeordnet werden kann.

10. Verfahren nach einem der Ansprüche 7 bis 9, wobei die Kühlflüssigkeit (15) mittels einer Kühleinheit (16) gekühlt wird.

11. Verfahren nach einem der Ansprüche 7 bis 10, wobei die Kühlflüssigkeit ein Verbrauchskühlmittel ist.

12. Verfahren nach einem der Ansprüche 7 bis 11, wobei der Treibstoff (8) auf Temperaturen kleiner als ungefähr -26°C (-15 Grad F) gekühlt wird.

13. Verfahren nach einem der Ansprüche 7 bis 11, wobei der Treibstoff (8) auf Temperaturen zwischen ungefähr -26°C und -45°C (-15 Grad F und -50 Grad F) gekühlt wird.

14. Verfahren nach einem der Ansprüche 7 bis 11, wobei der Treibstoff (8) auf Temperaturen unterhalb des Flammpunkts des Treibstoffs (8) gekühlt wird.

15. Verfahren nach einem der Ansprüche 7 bis 14, wobei der Schritt des Weiterleitens des Treibstoffs (8) vom bordeigenen Treibstoffspeichertank (42) zum Triebwerk (44) des Flugzeugs (22) den Schritt umfasst, den Treibstoff (8) in das Triebwerk (44) zu führen, während er bei verringerten Temperaturen ist.

16. Treibstoffabgabesystem zum Abgeben von Treibstoff (8) an ein Flugzeug (22), umfassend einen Treibstoffspeichertank (12) am Boden, **gekennzeichnet durch** eine mit dem Speichertank (12) verbundene Treibstoffleitung (38) zum Abgeben von Treibstoff (8) an einen Wärmetauscher (26) von innerhalb des Speichertanks (12); genannten mit der Treibstoffleitung (38) verbundenen Wärmetauscher (26) zum Aufnehmen und Kühlen des Treibstoffs (8) vom Treibstoffspeichertank (12) auf verringerte Temperaturen, die kleiner sind als Umgebungstemperaturen, wobei das gekühlte Volumen des Treibstoffs (8) auf unterhalb des Volumens des Treibstoffs (8) bei atmosphärischen Temperaturen verringert wird; und eine zweite mit dem Wärmetauscher (26) verbundene Treibstoffleitung (40) zum Abgeben des Treibstoffs (8) an das Flugzeug (22) bei verringerten Temperaturen.

17. Treibstoffabgabesystem nach Anspruch 16, zudem umfassend:

eine Kältemaschine (180) zum Komprimieren und Ausdehnen einer Kühlflüssigkeit, um Wärme vom Treibstoff (8) zu einer Wärmesenke weiterzuleiten; und ein Kühlflüssigkeitszirkulationssystem (174), das eine Kühlflüssigkeit zwischen der Kältemaschine (180) und dem Wärmetauscher (162) zum Weiterleiten von Wärme zwischen diesen und zum Erhöhen des Energiewerts des Treibstoffs (8) pro Volumeneinheit zirkuliert.

18. Treibstoffabgabesystem nach Anspruch 16 oder Anspruch 17, zudem umfassend eine zwischen dem Wärmetauscher (162) und der zweiten Treibstoffleitung (158) angeschlossene Wasserabscheidungseinheit (166) zum Entfernen von Wasser aus dem Treibstoff (8) bei den verringerten Temperaturen.

**Revendications**

1. Procédé de ravitaillement d'un avion (22) comportant un réservoir de stockage de carburant à bord (42), comprenant les étapes consistant à apporter un carburant liquide (8) pour ravitailler l'avion (22), à transférer le carburant (8) vers un endroit au sol, et le procédé étant **caractérisé par** :

le refroidissement du carburant (8) à des températures réduites à l'extérieur de l'avion (22) au sol et sensiblement inférieures à la température ambiante de sorte que le volume du carburant (8) soit réduit ; et le transfert du carburant (8) vers l'avion (22) alors que le carburant (8) est aux températures réduites et le stockage du carburant (8) dans le réservoir de stockage de carburant à bord (42), la température et le volume réduits du carburant (8) augmentant ainsi la valeur énergétique du carburant (8) par volume unitaire.

2. Procédé selon la revendication 1, dans lequel le carburant (8) est refroidi à des températures qui ne sont pas sensiblement inférieures à 0 °C (32 degrés F).

3. Procédé selon la revendication 1, dans lequel le carburant (8) est refroidi à des températures qui ne sont pas sensiblement inférieures à 22,2 °C (40 degrés F) en dessous des températures ambiantes.

4. Procédé selon la revendication 1, dans lequel le carburant (8) est refroidi à des températures comprises entre environ -18 °C et -45 °C (0 degré F et -50 degrés F).

5. Procédé selon la revendication 1, dans lequel le carburant (8) est refroidi à des températures situées au-dessus du point d'écoulement du carburant (8).

6. Procédé selon l'une quelconque des revendications précédentes, dans lequel le réservoir de stockage de carburant à bord (42) est isolé.

**7.** Procédé selon l'une quelconque des revendications précédentes, dans lequel l'étape consistant à refroidir le carburant (8) à des températures réduites comprend les étapes consistant à :

fournir un fluide caloporteur (15) ayant une température située en dessous des températures réduites ;

amener le carburant (8) dans une cuve de stockage (12) ;

fournir un échangeur de chaleur (26) ;

transférer une partie du carburant (8) de la cuve de stockage (12) vers l'échangeur de chaleur (26) ; et

utiliser le fluide caloporteur (15) dans l'échangeur de chaleur (26) pour refroidir la quantité de carburant (8) lorsque la quantité de carburant (8) passe à travers l'échangeur de chaleur (26) de sorte que la quantité de carburant (8) soit refroidie aux températures réduites.

**8.** Procédé selon la revendication 7, dans lequel le fluide caloporteur (15) comprend une deuxième quantité de carburant.

**9.** Procédé selon la revendication 7 ou la revendication 8, dans lequel l'échangeur de chaleur (26) est monté sur une unité mobile (24) qui peut être positionnée de manière sélective près de la cuve de stockage (12) et de l'avion (22).

**10.** Procédé selon l'une quelconque des revendications 7 à 9, dans lequel le fluide caloporteur (15) est refroidi au moyen d'une unité de réfrigération (16).

**11.** Procédé selon l'une quelconque des revendications 7 à 10, dans lequel le fluide caloporteur est un frigorigène non récupérable.

**12.** Procédé selon l'une quelconque des revendications 7 à 11, dans lequel le carburant (8) est refroidi à des températures inférieures à environ -26 °C (-15 degrés F).

**13.** Procédé selon l'une quelconque des revendications 7 à 11, dans lequel le carburant (8) est refroidi à des températures comprises entre environ -26 °C et -45 °C (-15 degrés F et -50 degrés F).

**14.** Procédé selon l'une quelconque des revendications 7 à 11, dans lequel le carburant (8) est refroidi à des températures situées sous le point d'éclair du carburant (8).

**15.** Procédé selon l'une quelconque des revendications 7 à 14, dans lequel l'étape consistant à transférer le carburant (8) du réservoir de stockage de carburant à bord (42) vers le moteur (44) de l'avion (22) comprend l'étape consistant à faire passer le carburant (8) dans le moteur (44) pendant qu'il est aux températures réduites.

**16.** Système d'acheminement de carburant destiné à acheminer le carburant (8) vers un avion (22), comprenant un réservoir de stockage de carburant (12) au sol, et
**caractérisé par**

une conduite de carburant (38) reliée audit réservoir de stockage (12) pour acheminer le carburant (8) vers un échangeur de chaleur (26) depuis l'intérieur dudit réservoir de stockage (12) ;

ledit échangeur de chaleur (26) relié à ladite conduite de carburant (38) pour recevoir et refroidir le carburant (8) provenant dudit réservoir de stockage de carburant (12) à des températures réduites, qui sont inférieures aux températures ambiantes, dans lequel le volume refroidi du carburant (8) est réduit en dessous du volume du carburant (8) aux températures atmosphériques; et

une deuxième conduite de carburant (40) reliée audit échangeur de chaleur (26) pour acheminer le carburant (8) vers l'avion (22) aux températures réduites.

**17.** Système d'acheminement de carburant selon la revendication 16, et comprenant en outre :

un refroidisseur (180) pour comprimer et dilater un fluide frigorigène pour transférer la chaleur du carburant (8) vers un puits thermique ; et
un système de circulation de fluide de refroidissement (174) qui fait circuler un fluide de refroidissement entre ledit refroidisseur (180) et ledit échangeur de chaleur (162) pour transférer la chaleur entre ceux-ci et augmenter la valeur énergétique du carburant (8) par volume unitaire.

**18.** Système d'acheminement de carburant selon la revendication 16 ou la revendication 17, comprenant en outre une unité de séparation d'eau (166) reliée entre ledit échangeur de chaleur (162) et ladite deuxième conduite de carburant (158) pour retirer l'eau du carburant (8) aux températures réduites.

## FIG. 1

JET "B" @-50°F — 14, 15

REFRIGERATION COMPRESSORS — 10, 16

26

24

18

34

FUEL

28 32

36

+AIR PRESSURE

30

38

20 — UNDERGROUND FUEL JET "A" STORAGE (35°F) — 12, 8

FUEL

44

42

22

−ΔT° JET FUEL — 40

EP 0 889 827 B1

FIG. 2

FIG. 5

11

FIG. 3

FIG. 4